(19) Europäisches Patentamt
European Patent Office
Office européen des brevets

(11) Veröffentlichungsnummer: **0 577 021 A1**

## (12) EUROPÄISCHE PATENTANMELDUNG

(21) Anmeldenummer: **93110184.4**

(22) Anmeldetag: **25.06.93**

(51) Int. Cl.5: **B65G 43/10**, B65G 47/31

(30) Priorität: **30.06.92 DE 4221464**

(43) Veröffentlichungstag der Anmeldung:
**05.01.94 Patentblatt 94/01**

(84) Benannte Vertragsstaaten:
**BE DE DK FR LU NL**

(71) Anmelder: **Bernhard Beumer Maschinenfabrik KG**
**Oelder Strasse 40**
**D-59269 Beckum(DE)**

(72) Erfinder: **Wiesmann, Thomas, Dipl.-Ing.**
**Soestweg 22**
**D-4720 Beckum(DE)**
Erfinder: **Kneuper, Franz-Josef, Dipl.-Ing.**
**Westernkamp 18**
**D-4835 Rietberg 3(DE)**

(74) Vertreter: **Hoormann, Walter, Dr.-Ing. et al**
**FORRESTER & BOEHMERT**
**Franz-Joseph-Strasse 38**
**D-80801 München (DE)**

(54) **Aufgabefördereinrichtung zum Aufgeben von Stückgutteilen auf einen Aufnahmeförderer.**

(57) Aufgabefördereinrichtung für einen Aufnahmeförderer, mit einer Zufördereinrichtung, einer Synchronisierfördereinrichtung, und mit einem Melder zum Melden eines freien Aufnahmeplatzes an die Übergabestelle, wobei die Zufördereinrichtung (22) die von ihr zugeführten Stückgutteile (2) mit einer Zuführgeschwindigkeit > 0 an die Synchronisierfördereinrichtung (27) übergibt, die Synchronisierfördereinrichtung (27) aus wenigstens zwei Synchronisierförderern (6, 7, 8) besteht, deren Maximallänge jeweils gleich dem Quotienten aus dem N-fachen der Länge (L) eines Aufnahmeplatzes (4') des Aufnahmeförderers (3) und dem Kosinus des zwischen dem Aufnahmeförderer (3) und der Aufgabefördereinrichtung (1) eingeschlossenen Winkel ($\alpha$) ist (N = n); und der erste Synchronförderer (8) bei Beschickung im wesentlichen mit Übergabegeschwindigkeit ($v_\ddot{u}$) angetrieben ist und an seinem Aufnahmeende einen Startbereich (28) aufweist, wobei eine erste Meßlinie (14) beim Durchfördern eines Stückgutteils (2) ein Signal erzeugt, welches eine Meß- und Auswerteinrichtung betätigt, mittels welcher die benötigte Förderzeit bis zur Übergabestelle (19) zu bestimmen ist, sowie diejenige Zeit, die von dem sich der Übergabestelle (19) nähernden freien Aufnahmeplatz (4') bis zur Übergabestelle (19) benötigt wird, wobei ein Differenzbildner für die ermittelten Zeiten vorgesehen ist, der das Differenzergebnis an die Steuereinrichtung der Aufgabefördereinrichtung (1) weiterleitet.

EP 0 577 021 A1

Die Erfindung betrifft eine Aufgabefördereinrichtung zum jeweils einzelnen Aufgeben von Stückgutteilen auf einen freien Aufnahmeplatz eines Aufnahmeförderers, insbesondere eine freie Schale eines als Kippschalenförderer ausgebildeten Sorters, mit einer Zufördereinrichtung, einer der Zufördereinrichtung nachgeordneten, antriebsmäßig steuerbaren Synchronisierfördereinrichtung, von welcher die zugeführten Stückgutteile von der Aufgabestelle ohne Relativbewegung [ = Gleiten, Kippen] zum Aufnahmeförderer zu fördern und mit einer in Förderrichtung der Aufgabefördereinrichtung gerichteten Übergabegeschwindigkeit zu übergeben sind, die im wesentlichen gleich dem Quotienten aus der Fördergeschwindigkeit des Aufnahmeförderers und dem Kosinus des zwischen der Aufgabefördereinrichtung und dem Aufnahmeförderer eingeschlossenen Winkel ist, und mit einem mit Abstand vor der Übergabestelle am Aufnahmeförderer angeordneten und von diesem betätigbaren Melder, welcher der Steuereinrichtung der Aufgabefördereinrichtung die Annäherung eines belegbaren, freien Aufnahmeplatzes an die Übergabestelle meldet.

Sorter dienen (bspw. bei der Post, in Versandhäusern, in Gepäckanlagen von Flughäfen etc.) zum gezielten Verteilen von Stückgutteilen an diverse Abgabestellen und müssen demgemäß durch entsprechende Aufgabeförderer bzw. Aufgabefördereinrichtungen mit dem zu verteilenden Stückgut beschickt werden. Dabei sind die Aufgabefördereinrichtungen i. a. in einem spitzen Winkel zum Aufnahmeförderer angeordnet, doch können sie auch zu diesem fluchten und die Stückgutteile mithin über Kopf an den Aufnahmeförderer übergeben.

Um den zwischenzeitlich sehr hohen Durchsatz derartiger Aufnahmeförderer nutzen zu können, ist es wünschenswert, deren Aufnahmeplätze so weit wie möglich auszunutzen, also jeweils möglichst viele freie Aufnahmeplätze mit einem Stückgutteil zu belegen. Dabei kommt der Größe der Übergabegeschwindigkeit (von der Aufgabefördereinrichtung auf den Aufnahmeförderer) an der Übergabestelle besondere Bedeutung zu. Um nämlich auch relativ kleine freie Aufnahmeplätze auf dem Aufnahmeförderer (bei einem Kippschalenförderer mithin eine jeweils freie Schale) auch mit einem hierzu relativ langen Stückgutteil belegen zu können, darf das aufzugebende Stückgut weder auf der Aufgabefördereinrichtung noch auch auf dem Aufnahmeförderer gleiten. Ist nämlich ein Gleiten eines übergebenen Stückgutteils auf den Aufnahmeförderer nicht auszuschließen, so muß ein freier Aufnahmeplatz des Aufnahmeförderer ersichtlich (in Relation zur Stückgutlänge) entsprechend größer sein. Dieses führt zu einer schlechteren Ausnutzung und damit zu einem geringeren Durchsatz.

Man sieht daher die Übergabegeschwindigkeit eines Stückgutteils von der Aufgabefördereinrichtung auf den Aufnahmeförderer zweckmäßigerweise so vor (s. DE-PS 29 09 292), daß ihre in Förderichtung des Aufnahmeförderers gerichtete Komponente gleich der Fördergeschwindigkeit des Aufnahmeförderers ist. Auf diese Weise kann es nicht zu einem Gleiten eines auf den Aufnahmeförderer übergebenen Stückgutteils in Längsrichtung des Aufnahmeförderers kommen, so daß eine genaue Plazierung möglich ist. Außerdem sieht man durch geeignete Maßnahmen vor (s. ebenfalls DE-PS 29 09 292), daß es auch bereits auf der Aufgabefördereinrichtung nicht zu einem Gleiten (oder Kippen bzw. Überschlagen) zwischen einem Stückgutteil und der Förderebene der Aufgabefördereinrichtung kommt, damit ein sich der Übergabestelle nähernder freier Aufnahmeplatz des Aufnahmeförderers, der von einem am Aufnahmeförderer angeordneten und von diesem betätigten Melder gemeldet worden ist, plaziert belegt werden kann und letztlich der Durchsatz zu optimieren ist.

Bekannte Aufgabefördereinrichtungen der hier in Rede stehenden Gattung, wie sie aus der DE-PS 29 09 292 bekannt sind, arbeiten mit einer Beschleunigungsstrecke, an deren Anfang sich eine Startlinie befindet, an welcher das jeweils aufzugebende Stückgutteil in Wartestellung positioniert und erst dann gestartet wird, wenn der bereits erwähnte Melder die Annäherung eines freien Aufnahmeplatzes des Aufnahmeförderers an die Übergabestelle meldet.

Diese Arbeitsweise ist deshalb im Hinblick auf einen anzustrebenden möglichst hohen Durchsatz noch nicht optimal, weil der Durchsatz der Aufgabefördereinrichtung durch die jeweilige Verzögerung der zugeführten Stückgutteile auf die Geschwindigkeit Null und ihre Verweildauer an der Startlinie zwangsläufig vermindert wird. In diesem Sinne kommt weiterhin hinzu, daß ein an der Startlinie wartendes Stückgutteil - obwohl es mit Zufördergeschwindigkeit zugeführt worden ist - zunächst einmal wieder auf Zufördergeschwindigkeit und sodann ggf. darüber hinaus beschleunigt werden muß, wobei dieser Beschleunigung, wie bereits ausgeführt worden ist, Grenzen gesetzt sind, wenn ein Gleiten oder/und Kippen des Stückgutteils auf der Aufgabefördereinrichtung vermieden werden soll.

Aus der JP-OS 78 577/78 ist eine Aufgabefördereinrichtung zum einzelnen Aufgeben von Stückgutteilen auf einen Aufnahmeförderer bekannt, die sich von dem Ausführungsbeispiel der DE-PS 29 09 292 dadurch unterscheidet, daß ihre Synchronisierfördereinrichtung aus mehreren einander nachgeordneten Synchronisierförderern besteht. Dabei wird der dem (als Taktförderer ausgebildeten, die Startlinie bildenden) Zuförderer nachgeordnete erste Synchronisierförderer-jeweils von der Fördergeschwindigkeit Null auf eine Endgeschwindigkeit beschleunigt, die gleich der Anfangsgeschwindigkeit des ihm nachgeordneten zweiten Synchronförderers ist, um ein Gleiten der Stückgutteile bei der Übergabe von einem Synchronförderer auf einen nachgeordneten Synchronförderer zu vermeiden, und der letzte Synchronförderer wird bis auf die oben bereits definierte Übergabegeschwindigkeit beschleunigt, also auf eine Geschwindigkeit, deren in Förderrichtung des Aufnahmeförderers gerichtete Komponente gleich der Fördergeschwindigkeit des Aufnahmeförderers ist.

Es ist ohne weiteres erkennbar, daß auch bei dieser vorbekannten Aufgabefördereinrichtung bzgl. des erzielbaren Durchsatzes der Gesamtanlage im wesentlichen die gleichen Verhältnisse vorliegen wie bei der zuvor angesprochenen Aufgabefördereinrichtung gemäß der DE-PS 29 09 292.

Der vorliegenden Erfindung liegt die Aufgabe zugrunde, eine gattungsgemäß Aufgabefördereinrichtung zu schaffen, die einen höheren Durchsatz als vorbekannte Aufgabefördereinrichtungen erzielen läßt, und mittels welcher demgemäß letztlich auch der Durchsatz des nachgeordneten Aufnahmeförderers zu erhöhen ist, wobei dennoch angestrebt wird, die auf die aufzugebenden Stückgutteile einwirkenden Beschleunigungen bzw. Verzögerungen zu reduzieren.

Die Lösung dieser Aufgabe besteht erfindungsgemäß darin, daß die Zufördereinrichtung die von ihr mit beliebiger Taktfolge zugeführten Stückgutteile mit einer Zuführgeschwindigkeit > 0 an die Synchronisierfördereinrichtung übergibt; daß die Synchronisierfördereinrichtung aus wenigstens zwei einander unmittelbar nachgeordneten Synchronisierförderern besteht, wobei deren Maximallänge jeweils gleich dem Quotienten aus dem N-fachen der Länge eines Aufnahmeplatzes des Aufnahmeförderers und dem Kosinus des zwischen dem Aufnahmeförderer und der Aufgabefördereinrichtung eingeschlossenen Winkel ist, wobei N = n ist; und daß der der Zufördereinrichtung unmittelbar nachgeordnete erste Synchronförderer bei Beschickung mit einem Stückgutteil im wesentlichen mit Übergabegeschwindigkeit angetrieben ist und an seinem Aufnahmeende einen mit einer sich über seine Förderbahn erstreckenden ersten Meßlinie versehenen Startbereich aufweist, wobei die erste Meßlinie beim Durchfördern eines Stückgutteils ein Signal erzeugt, welches eine Meß- und Auswerteinrichtung betätigt, mittels welcher zum einen diejenige Förderzeit zu bestimmen ist, die von dem betreffenden Stückgutteil benötigt wird, um den verbleibenden weg bis zur Übergabestelle mit der derzeitigen Momentangeschwindigkeit zurückzulegen, und zum anderen diejenige Zeit, die zum selben Zeitpunkt von dem sich der Übergabestelle nähernden freien Aufnahmeplatz benötigt wird, um den verbleibenden Weg bis zur Übergabestelle zurückzulegen, wobei ein Differenzbildner für die ermittelten Zeiten vorgesehen ist, der das Differenzergebnis an die Steuereinrichtung der Aufgabefördereinrichtung weiterleitet, wenn sich das Stückgutteil noch im Startbereich befindet, wobei die derzeitige Fördergeschwindigkeit des ersten Synchronisierförderers unverändert bleibt, wenn die vom Differenzbildner ermittelte Differenz Null ist, während die Steuereinrichtung bei einer positiven oder negativen Differenz, die absolut nicht größer ist als ein vorgegebener Differenzwert, bei dessen Überschreiten das betreffende Stückgutteil den sich der Übergabestelle nähernden freien Aufnahmeplatz nicht mehr erreichen kann, ohne unzulässig stark beschleunigt oder verzögert zu werden, ein Korrektursignal erhält, welches die Antriebsdrehzahl des Antriebes des ersten Synchronisierförderers so erhöht bzw. vermindert, daß das Stückgutteil nach entsprechender Beschleunigung bzw. Verzögerung, einer Förderung mit erhöhter bzw. verminderter Fördergeschwindigkeit und Verzögerung bzw. Beschleunigung auf die Übergabegeschwindigkeit längs einer Korrekturstrecke die Übergabestelle mit Übergabegeschwindigkeit gleichzeitig mit dem sich der Übergabestelle nähernden freien Aufnahmeplatz erreicht.

Abweichend von den vorbekannten Aufgabefördereinrichtungen der hier in Rede stehenden Gattung werden die zugeführten Stückgutteile mithin zunächst einmal so getaktet, daß der gegenseitige Abstand zwischen den gleichartigen Bezugsstellen (bspw. der Vorderkante) aufeinanderfolgender Stückgutteile (ggf. unter Berücksichtigung des zwischen Aufnahmeförderer und Aufgabefördereinrichtung eingeschlossenen Winkels) abstandsmäßig gleich der Taktfolge zweier Aufnahmeplätze (bei einem Kippschalenförderer also aufeinanderfolgender Schalen) des Aufnahmeförderers ist.

Dieses "anpassende Takten" reicht indes ersichtlich noch nicht aus, um eine definierte, optimale Plazierung auf dem Aufnahmeförderer zu gewährleisten. Denn hierfür ist außerdem eine eventuelle Phasenverschiebung an der Übergabestelle sowie auch die Fördergeschwindigkeit zu berücksichtigen.

Weiterhin unterscheidet sich die erfindungsgemäße Aufgabefördereinrichtung von den vorbekannten Aufgabefördereinrichtungen dadurch, daß die Stückgutteile bei der Zuführung nicht mehr auf die Geschwindigkeit Null (an der Startlinie) verzögert werden und an der Startlinie über eine gewisse Verweilzeit verharren, sondern daß die Zufördergeschwindigkeit zur Erzielung eines hohen Durchsatzes genutzt und diese im wesentlichen wie die weiter oben bereits wiederholt definierte Übergabegeschwindigkeit gewählt wird.

Außerdem unterscheidet sich die erfindungsgemäße Aufgabefördereinrichtung u. a. von den vorbekannten Aufgabefördereinrichtungen dadurch, daß statt einer Startlinie ein Startbereich (gleichsam in der Art eines "Startfensters") geschaffen wird, der weiter unten noch im einzelnen erläutert wird.

Schließlich unterscheidet sich die erfindungsgemäße Aufgabefördereinrichtung von den vorbekannten Aufgabefördereinrichtungen noch dadurch, daß zwecks optimaler Synchronisierung die jeweiligen Förderzeiten eines sich der Übergabestelle nähernden freien Aufnahmeplatzes sowie eines zur Übergabestelle geförderten Stückgutteils verglichen und ggf. korrigiert werden, und zwar vorzugsweise durch geeignete Wegmessungen, wie dieses weiter unten ebenfalls noch im einzelnen beschrieben ist.

Es ist ohne weiteres zu ersehen, daß der Durchsatz schon dadurch erheblich zu erhöhen ist, daß man die auf den Aufnahmeförderer aufzugebenden Stückgutteile nicht jeweils nach ihrer Zuförderung (an einer Startlinie) auf die Geschwindigkeit Null verzögert, ggf. an der Startlinie eine längere Zeit warten läßt und sodann (letztlich auf Übergabegeschwindigkeit) beschleunigt, sondern wie bereits ausgeführt getaktet im wesentlichen mit Übergabegeschwindigkeit zuführt und in diesem Geschwindigkeitszustand die erforderlichen Maßnahmen für eine optimale Synchronisierung ergreift.

Letzteres erfolgt bevorzugt nicht lediglich an dem ersten Synchronisierförderer der Synchronisierfördereinrichtung, sondern an mehreren, vorzugsweise sämtlichen Synchronisierförderern, wie weiter unten noch im einzelnen erläutert ist, so daß eine genaue Synchronisierung und damit eine entsprechend genaue Plazierung der aufzugebenden Stückgutteile auf den Aufnahmeförderer gesichert ist.

Durch die Schaffung eines Startbereiches (statt einer Startlinie) ist es ersichtlich möglich, ggf. ein Stückgutteil, welches die im Bereich des Startbereiches verlaufende erste Meßlinie passiert hat, ohne daß der dem Aufnahmeförderer zugeordnete Melder die Annäherung eines freien Aufnahmeplatzes an die Übergabestelle gemeldet hat, auch dann noch auf den nächsten sich der Übergabestelle nähernden freien Aufnahmeplatz des Aufnahmeförderers aufzugeben, und zwar dann, wenn es bei Meldung eines sich der Übergabestelle nähernden freien Aufnahmeplatzes des Aufnahmeförderers noch möglich ist, daß das betreffende Stückgutteil, welches die erste Meßlinie bereits passiert hat, sich aber noch im Startbereich befindet, diesen nächsten freien Aufnahmeplatz noch erreichen kann, ohne dafür unzulässig stark verzögert werden zu müssen.

Entsprechendes gilt, wenn der Melder die Annäherung eines freien Aufnahmeplatzes an die Übergabestelle meldet, bevor ein von der Zufördereinrichtung im wesentlichen mit Übergabegeschwindigkeit zugefördertes Stückgutteil die erste Meßlinie erreicht hat, und wenn es noch möglich ist, daß dieses Stückgutteil diesen sich der Übergabestelle nähernden freien Aufnahmeplatz noch erreichen kann, ohne dafür unzulässig stark beschleunigt werden zu müssen.

Im Hinblick auf die angestrebte Optimierung bzw. Maximierung des Durchsatzes ist es ersichtlich höchst zweckmäßig bzw. - geboten, daß man die auf der Aufgabefördereinrichtung befindlichen Stückgutteile hinsichtlich ihrer Fördergeschwindigkeit jeweils individuell beeinflussen kann. Dieses setzt wiederum voraus, daß sich jeweils nur ein einziges Stückgutteil auf jedem Synchronförderer der Synchronisierfördereinrichtung befindet.

Da aus den genannten Gründen bereits die Zufördergeschwindigkeit im wesentlichen der Zufördergeschwindigkeit entspricht und demgemäß auch der getaktete Abstand der Bezugsstellen aufeinanderfolgender Stückgutteile im Hinblick auf die Teilung der Aufnahmeplätze des Aufnahmeförderers vorgegeben ist, darf mithin die Maximallänge der einzelnen Synchronförderer nicht größer sein als der Quotient aus dem N-fachen der Länge eines Aufnahmeplatzes des Aufnahmeförderers und dem Kosinus des zwischen dem Aufnahmeförderer und der Aufgabefördereinrichtung eingeschlossenen Winkels, wenn jeder n-te Platz des Aufnahmeförderers beschickbar sein soll (mit N = n), da anderenfalls ggf. zwei oder mehr Stückgutteile auf einem einzigen Synchronförderer angeordnet sein können und dann nicht mehr individuell bzgl. ihrer Geschwindigkeit zu beeinflussen sind.

Die zwecks optimaler Synchronisation zu bestimmenden Förderzeiten des betreffenden Stückgutteils und des betreffenden freien Aufnahmeplatzes des Aufnahmeförderers werden bevorzugt unter Berücksichtigung der Momentangeschwindigkeit des Stückgutteils bzw. des Aufnahmeförderers jeweils über den momentanen Abstand des Stückgutteils bzw. des freien Aufnahmeplatzes von der Übergabestelle im Zeitpunkt einer entsprechenden Überprüfung ermittelt, und zwar bevorzugt jeweils aus der Differenz des vorbekannten Abstandes der ersten Meßlinie bzw. des Melders zur Übergabestelle und dem seit Auslösung des betreffenden Signals bereits zurückgelegten Weges.

Hierfür kann der Meßlinie des ersten Synchronisierförderers (entsprechendes gilt für die weiteren Synchronisierförderer der Synchronisierfördereinrichtung) ein durch ein von der ersten Meßlinie erzeugtes Signal in Betrieb zu setzender Impulsgeber zugeordnet sein, dessen Impulse inkrementalen Wegstrecken der Förderbahn des ersten Synchronförderers entsprechen, wobei dem Impulsgeber ein Impulszähler zugeordnet ist, und es kann dem Melder des Aufnahmeförderers ein zweiter Impulsgeber zugeordnet sein, dessen Impulse inkrementalen Wegstrecken des Aufnahmeförderers entsprechen, wobei auch diesem zweiten Impulsgeber ein Impulszähler zugeordnet ist, und wobei der Differenzbildner die Zählerstände der beiden Impulszähler vergleicht, wie dieses weiter unten an einem Ausführungsbeispiel noch im einzelnen erläutert wird.

Bei der erfindungsgemäßen Aufgabefördereinrichtung kann die Anzahl der Synchronförderer der Synchronfördereinrichtung zweckmäßigerweise gleich dem Quotienten aus der maximal erforderlichen Korrekturstrecke und der Synchronförderer-Maximallänge (also dem Quotienten aus dem N-fachen der Länge eines Aufnahmeplatzes eines Aufnahmeförderers und dem Kosinus des zwischen dem Aufnahmeförderer und der Aufgabefördereinrichtung eingeschlossenen Winkel) sein, wobei N = n ist. Dieses Erfordernis ergibt sich daraus, daß die Länge der Synchronisierfördereinrichtung wenigstens so groß sein muß wie die maximal erforderliche Korrekturstrecke.

Zweckmäßigerweise wird in Ausgestaltung der vorliegenden Erfindung die Anzahl der Synchronisierförderer um eine Einheit größer ausgebildet als die sich aus den vorliegenden Darlegungen ergebende Mindestanzahl der Synchronisierförderer, weil es möglich sein muß, ein bereits auf der Aufgabefördereinrichtung befindliches Stückgutteil ggf. anzuhalten, wenn sich der Übergabestelle über einen längeren Zeitraum kein freier Aufnahmeplatz nähert. Hierfür kann sodann der weitere am Ende der Synchronisierfördereinrichtung angeordnete Synchronisierförderer verwendet werden, wobei in einem solchen Falle natürlich nicht nur dieser letzte Synchronisierförderer auf die Geschwindigkeit Null verzögert wird, sondern auch die ihm vorgeordneten Synchronisierförderer.

Im übrigen hat es sich schon aus Fertigungsgründen als höchst zweckmäßig herausgestellt, wenn die Synchronisierförderer der Synchronisierfördereinrichtung gleich lang ausgebildet werden.

Weiterhin hat es sich als zweckmäßig (da auch für einen großen Durchsatz als ausreichend) herausgestellt, wenn n = 2 oder 3 ist, wenn die Ausgestaltung also so getroffen wird, daß von der Aufgabefördereinrichtung jeder zweite bzw. dritte Aufnahmeplatz mit einem Stückgutteil beschickbar ist, da einem Aufnahmeförderer in aller Regel eine Vielzahl von Aufgabefördereinrichtungen zugeordnet ist und sich demgemäß der Übergabestelle einer Aufgabefördereinrichtung i. d. R. eine Folge bereits belegter Aufnahmeplätze nähert.

Weiterhin ist bevorzugt vorgesehen, daß zwei einander nachgeordnete Synchronisierförderer der Synchronisierfördereinrichtung jeweils gleichzeitig gleichmäßig zu beschleunigen bzw. zu verzögern sind, wenn ein Stückgutteil von einem Synchronisierförderer auf den nachfolgenden Synchronisierförderer übergeben wird, daß also im Zeitpunkt der Stückgutübergabe von einem Synchronisierförderer auf den nachfolgenden nicht nur die Geschwindigkeiten der beiden betroffenen Synchronisierförderer im wesentlichen gleich sind, damit es bei Beschleunigung oder Verzögerung des einen oder anderen der beiden beteiligten Synchronisierförderer nicht zu einem Gleiten des Stückgutteils kommt.

Weitere bevorzugte Ausgestaltungen der vorliegenden Erfindung sind in den Unteransprüchen beschrieben.

Die Erfindung ist nachstehend an einem Ausführungsbeispiel unter Bezugnahme auf eine schematische Zeichnung weiter erläutert.

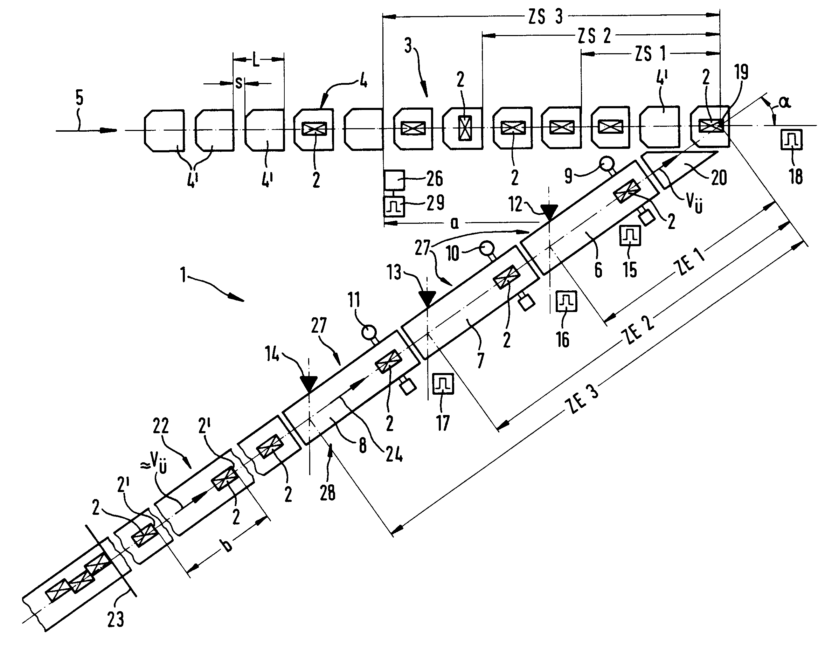

Die Zeichnung zeigt eine Teildraufsicht auf eine im ganzen mit 1 bezeichnete Aufgabefördereinrichtung zum einzelnen Aufgeben von Stückgutteilen 2 auf jeweils einen freien Aufnahmeplatz eines als Sorter arbeitenden Aufnahmeförderers 3, dessen Förderschalen 4 die Aufnahmeplätze bilden. Von dem Aufnahmeförderer 3 werden die Stückgutteile 2 jeweils an einer nicht dargestellten, vorgegebenen Abgabestelle durch seitliches Kippen der betreffenden Förderschale 4 abgegeben.

Die Aufgabefördereinrichtung 1 ist unter einem spitzen Einschleuswinkel $\alpha$ zum Aufnahmeförderer 3 angeordnet, und zwar derart, daß die Förderfläche der Aufgabefördereinrichtung 1 etwas höher verläuft als die Tragflächen der Förderschalen 4.

Die zunächst in zufälliger (Un-)Ordnung anfallenden, auf den Aufnahmeförderer 3 aufzugebenden Stückgutteile 2 werden zunächst auf einer Zufördereinrichtung 22 durch nicht dargestellte Einrichtungen vereinzelt und mittels einer Lichtschranke 23 in bestimmter Weise "entzerrt", wie dieses weiter unten noch im einzelnen erläutert ist. Der Zufördereinrichtung 22 ist eine Synchronisier-Fördereinrichtung 27 nachgeordnet, von welcher die zugeführten Stückgutteile 2 letztlich mit einer in Förderrichtung 24 der Aufgabefördereinrichtung 1 gerichteten Übergabegeschwindigkeit zu übergeben sind, die gleich dem Quotienten aus der in Förderrichtung 5 des Aufnahmeförderers 3 gerichteten Fördergeschwindigkeit des Aufnahmeförderers 3 und dem Kosinus des zwischen der Aufgabefördereinrichtung 1 und dem Aufnahmeförderer 3 eingeschlossenen Winkels $\alpha$ ist.

Mit einem Abstand a vor der Übergabestelle 25 ist am Aufnahmeförderer 3 ein von dem Aufnahmeförderer 3 betätigbarer Melder 26 angeordnet, welcher der nicht dargestellten Steuereinrichtung der Aufgabefördereinrichtung 1 die Annäherung eines belegbaren freien Aufnahmeplatzes 4' an die Übergabestelle 19 meldet.

Die Zufördereinrichtung 22 arbeitet in ihrem letzten einer im ganzen mit 27 bezeichneten Synchronisierfördereinrichtung vorgeordneten Abschnitt so, daß die von ihr der Synchronisierfördereinrichtung 27 zugeführten Stückgutteile 2 derart vereinzelt werden, daß der gegenseitige Abstand b der als Bezugsstellen

EP 0 577 021 A1

dienenden Vorderkanten 2' zweier aufeinander folgender, zugeführter Stückgutteile 2, 2 jeweils gleich groß ist. Da die Aufgabefördereinrichtung 1 so ausgelegt ist, daß sie ggf. in der Lage ist, jede zweite Förderschale 4 zu beschicken, welche sich der Übergabestelle 19 nähert (n = 2), ist der gegenseitige Abstand b der Vorderkanten 2', 2' zweier aufeinanderfolgender, von der Zufördereinrichtung 22 mit Übergabegeschwindigkeit $v_{ü}$ zugeführter Stückgutteile jeweils gleich dem Quotienten aus dem Zweifachen der Länge L eines Aufnahmeplatzes 4 (zzgl. des Abstandes s zwischen zwei einander benachbarten Förderschalen 4, 4) und dem Kosinus des zwischen dem Aufnahmeförderer 3 und der Aufgabefördereinrichtung 1 eingeschlossenen Winkels α.

Die Synchronisierfördereinrichtung 27 besteht aus drei einander nachgeordneten Synchronisierförderern 6, 7 und 8. Die Maximallänge der Synchronförderer 6 - 8 ist jeweils gleich dem Quotienten aus dem Zweifachen der Länge L eines Aufnahmeplatzes 4' des Aufnahmeförderers 3 (zzgl. des Abstandes s zwischen zwei einander benachbarten Förderschalen 4, 4) und cos α.

Der der Zufördereinrichtung 22 unmittelbar nachgeordnete erste Synchronförderer 8 ist bei Beschickung mit einem Stückgutteil 2 bereits mit der oben schon wiederholt definierten Übergabegeschwindigkeit $v_{ü}$ angetrieben, so daß die Übergabe des betreffenden Stückgutteils 2 von der Zufördereinrichtung 22 auf den ersten Synchronförderer 8 problemlos ohne Gleitgefahr erfolgen kann. An seinem der Zufördereinrichtung 22 zugekehrten Aufnahmeende besitzt der erste Synchronförderer 8 einen auch als "Startfenster" bezeichnenbaren Startbereich 28 mit einer sich über seine Förderbahn erstreckenden ersten Meßlinie 14, die als Lichtschranke ausgebildet ist. Die erste Meßlinie 14 erzeugt beim Durchsetzen bzw. Durchfördern des betreffenden Stückgutteils 2 ein Signal, welches einen ersten Impulsgeber 17 betätigt, dessen Impulse inkrementalen Streckenabschnitten der Förderbahn des ersten Synchronförderers 8 entsprechen. Dem ersten Impulsgeber 17 ist ein erster Impulszähler ZE 3 zugeordnet.

Der am Aufnahmeförderer 3 angeordnete Melder 26, welcher der nicht dargestellten Steuereinrichtung der Aufgabefördereinrichtung 1 die Annäherung einer freien Förderschale 4 an die Übergabestelle 19 meldet, betätigt zugleich einen Impulsgeber 29, dessen Impulse inkrementalen Streckenabschnitten der Förderbahn des Aufnahmeförderers 3 entsprechen, welche die gemeldete freie Förderschale 4 ab ihrer Meldung auf ihrem Weg zur Übergabestelle 19 zurückgelegt hat. Dieser Impulsgeber 29 wirkt mit einem weiteren Zähler ZS 3 zusammen.

Das beim Durchfördern der ersten Meßlinie 14 von dem betreffenden Stückgutteil 2 erzeugte Signal soll an sich bewirken, daß zum einen diejenige Förderzeit bestimmt wird, die von dem betreffenden Stückgutteil 2 noch benötigt wird, um den noch verbleibenden Weg bis zur Übergabestelle 19 mit der derzeitigen Momentangeschwindigkeit zurückzulegen, und zum anderen diejenige Zeit, die zum selben Zeitpunkt von dem sich der Übergabestelle 19 nähernden freien Aufnahmeplatz 4' benötigt wird, um den Weg vom Melder 26 (bzw. dem danach noch verbleibenden Weg) bis zur Übergabestelle 19 mit der Fördergeschwindigkeit des Aufnahmeförderers 3 zurückzulegen, und um bei einer Differenz der ermittelten Zeiten eine geeignete Korrektur vornehmen zu können, damit es zu einer genauen Synchronisierung und letztlich Plazierung des Stückgutteils 2 auf dem freien Platz 4' des Aufnahmeförderers 3 kommen kann. Zu diesem Zwecke ist überdies ein nicht dargestellter Differenzbildner für die ermittelten Zeiten vorgesehen, der das Differenzergebnis an die Steuereinrichtung der (nicht dargestellten) Aufgabefördereinrichtung weiterleitet.

Da die vorstehend erwähnten Förderzeiten des freien Aufnahmeplatzes 4' bzw. des betreffenden Stückgutteils 2 gleichsam "in der Zukunft liegen", also zuvor nicht direkt meßbar sind, erfolgt die Bestimmung dieser für die Synchronisation wichtigen Förderzeiten unter Berücksichtigung der jeweiligen Momentangeschwindigkeit des Stückgutteils 2 bzw. des freien Aufnahmeplatzes 4' jeweils über den momentanen Abstand, den das Stückgutteil 2 bzw. der betreffende freie Aufnahmeplatz 4' zum Zeitpunkt der Zeitbestimmung noch von der Übergabestelle 19 hat. Da auch diese Abstände nur relativ schwierig zu ermitteln wären, erfolgt ihre Ermittlung mittelbar, nämlich jeweils aus der Differenz des vorbekannten Abstandes a des Melders 26 zur Übergabestelle 19 bzw. der ersten Meßlinie 14 zur Übergabestelle 19 und dem seit Auslösung des betreffenden Signals vom Melder 26 bereits zurückgelegten Weg in der zuvor bereits beschriebenen Weise, wie nachstehend noch weiter erläutert wird.

Zuvor sei noch darauf verwiesen, daß auch die beiden übrigen Synchronförderer 6 und 7 jeweils mit einer Meßlinie 12 bzw. 13 versehen sind, daß der Meßlinien 12 und 13 jeweils ebenfalls ein Impulsgeber 15 bzw. 16 zugeordnet ist, mit dem von dem betreffenden Synchronförderer 6 bzw. 7 nach Auslösung eines Signals durch die entsprechende Meßlinie 12 bzw. 13 die von dem betreffenden Synchronförderer zurückgelegten inkrementalen Wegstrecken zu bestimmen sind, und daß den Impulsgebern 15 und 16 jeweils ebenfalls ein Impulszähler ZE 1 bzw. ZE 2 zugeordnet ist.

Weiterhin sei darauf verwiesen, daß jedem Synchronförderer 6 bzw. 7 bzw. 8 jeweils ein eigener stufenlos und unabhängig von den Antrieben der anderen Synchronförderer steuerbarer Antrieb 9 bzw. 10 bzw. 11 zugeordnet ist, und daß die Meßlinien 12 - 14 jeweils als Lichtschranke ausgebildet sind, die

6

rechtwinklig zu der Förderrichtung 5 des Aufnahmeförderers 3 verläuft.

Schließlich sei noch darauf verwiesen, daß der Synchronisierfördereinrichtung 27 ein sog. Trapezband nachgeordnet ist, welches gleichsam die Förderlücke zwischen dem Synchronisierförderer 6 und der Übergabestelle 19 schließt. Dieses Trapezband 20 ist mit Übergabegeschwindigkeit angetrieben. Es könnte grundsätzlich auch integraler Bestandteil des Synchronisierförderers 6 sein und würde sodann mit dessen Antrieb 9 angetrieben werden.

Wie der Zeichnung zu entnehmen ist, ist der Aufnahmeförderer 3 in dem beispielhaft wiedergegebenen Belegungszustand bereits relativ stark von Stückgutteilen 2 besetzt. Unmittelbar vor der Übergabestelle 19 befindet sich eine freie Förderschale 4', die von dem auf dem Synchronisierförderer 6 befindlichen Stückgutteil 2 beschickt werden kann. An diese freie Förderschale 4' schließen sich zunächst einmal fünf jeweils durch ein Stückgutteil 2 belegte Förderschalen 4 an. Erst danach folgt wiederum eine freie Förderschale 4', die sich gerade an derjenigen Stelle befindet, an welcher der Melder 26 installiert ist.

Sobald der Melder 26 festgestellt und gemeldet hat, daß sich ein freier Aufnahmeplatz 4' der Übergabestelle 19 nähert, betätigt er gleichzeitig den Impulsgeber 29, der nunmehr in Betrieb gesetzt wird und Impulse erzeugt, die inkrementalen Streckenabschnitten entsprechen, welche der Aufnahmeförderer 3 und damit auch dessen vom Melder 26 gemeldete freie Schale 4' (mit der Fördergeschwindigkeit des Aufnahmeförderers 3) zurücklegen. Diese Impulse werden von dem Impulszähler ZS 3 gezählt.

Befindet sich auf dem ersten Synchronförderer 8 ein Stückgutteil 2 noch in dessen Startbereich ("Startfenster"), so daß das betreffende Stückgutteil 2 die Übergabestelle 19 noch erreichen kann, ohne in unzulässiger Weise beschleunigt oder verzögert werden zu müssen, so werden die geeigneten Maßnahmen eingeleitet, damit das betreffende Stückgutteil 2 die Übergabestelle 19 synchron mit dem freien Aufnahmeplatz 4' mit Übergabegeschwindigkeit $v_{\ddot{u}}$ erreicht.

Nimmt man einmal an, daß das auf dem Synchronförderer 8 befindliche Stückgutteil 2 die erste Meßlinie 14 gerade in dem Zeitpunkt durchsetzt, in dem der Melder 26 die Annäherung eines freien Aufnahmeplatzes 4' an die Übergabestelle 19 meldet, und daß die Zeit, die das betreffende Stückgutteil 2 benötigt, um mit der ihm bereits von der Zufördereinrichtung 22 erteilten Übergabegeschwindigkeit $v_{\ddot{u}}$, welche auch der erste Synchronförderer 8 innehat, genau so groß ist wie die Zeit, welche die gemeldete freie Förderschale 4' bis zur Übergabestelle 19 benötigt, so sind die von dem Impulsgeber 17 erzeugten und dem ihm zugeordneten ersten Impulszähler ZE 3 gezählten Impulse genau so groß wie die von dem Impulsgeber 29 erzeugten und dem Zähler ZS 3 gezählten Impulse, so daß die von dem Differenzbildner gebildete Differenz Null ist und die Momentangeschwindigkeit des ersten Synchronförderers 8 nicht verändert wird.

Nimmt man dagegen einmal an, daß das dem ersten Synchronisierförderer 8 zugeförderte Stückgutteil 2 die erste Meßlinie 14 bereits durchsetzt bzw. durchfördert hat, bevor der Melder 26 die Annäherung einer freien Förderschale 4' an die Übergabestelle 19 meldet, so stellt der Differenzbildner bei der Auswertung der Zähler ZE 3 und ZS 3 eine Differenz fest, da die Anzahl der vom Zähler ZE 3 gezählten Impulse größer ist als die vom Zähler ZS 1 gezählten Impulse. Würde das Stückgutteil 2 mit unveränderter Fördergeschwindigkeit $v_{\ddot{u}}$ weiterbefördert werden, so würde es die Übergabestelle 19 ersichtlich bereits erreichen, bevor die freie Förderschale 4' die Übergabestelle 19 erreicht. Das betreffende Stückgutteil 2 muß also verzögert werden, über eine bestimmte Strecke mit dieser verminderten Fördergeschwindigkeit weitergefördert und sodann wieder auf Übergabegeschwindigkeit $v_{\ddot{u}}$ beschleunigt werden. Der hierfür erforderliche Weg ist oben als "Korrekturstrecke" definiert worden.

Danach könnte das betreffende Stückgutteil 2 nunmehr unter der Voraussetzung, daß die erfolgte Korrektur (Verlangsamung auf der Korrekturstrecke) richtig erfolgt ist, an sich mit Übergabegeschwindigkeit $v_{\ddot{u}}$ bis zur Übergabestelle 19 durchlaufen und dort übergeben werden. Um jedoch eventuelle Korrekturfehler bzw. -ungenauigkeiten noch berücksichtigen zu können, wird dieser Vorgang am zweiten Synchronförderer 7 und am dritten Synchronförderer 6 nochmals wiederholt, d. h. es werden auch dort nochmals entsprechende Vergleiche durchgeführt. Durchsetzt das betreffende Stückgutteil 2 am zweiten Synchronförderer 7 dessen Meßlinie 13, so wird der mit dieser zusammenwirkende Impulsgeber 16 betätigt und es werden die von ihm erzeugten Impulse, die wiederum inkrementalen Wegstrecken des zweiten Synchronförderers 7 entsprechen, von dem zweiten Impulszähler ZE 2 gezählt. Gleichzeitig wird ein in der Zeichnung der besseren Übersicht halber nicht dargestellter weiterer Impulsgeber am Aufnahmeförderer 3, der mit einem weiteren Zähler ZS 2 zusammenwirkt, in Betrieb gesetzt, und es werden erneut die von den Zählern ZS 2 bzw. ZE 2 gezählten Impulse vom Differenzbildner miteinander verglichen. Ist die Differenz Null, weil die zuvor durchgeführte Korrektur nicht nur qualitativ, sondern auch quantitativ richtig durchgeführt worden ist, so wird die Fördergeschwindigkeit des zweiten Synchronförderers 8 nicht verändert, sondern das Stückgutteil 2 läuft auf diesem mit Übergabegeschwindigkeit $v_{\ddot{u}}$ weiter in Richtung auf die Übergabestelle 19. Ergibt sich aber bei der Differenzbildung eine positive oder negative Differenz, so wird der Antrieb 10 des zweiten Synchronförderers 7 je nach Erfordernis so beeinflußt, daß er über eine Korrekturstrecke beschleunigt bzw. verzögert wird, wobei das Stückgutteil 2 letztlich wiederum auf Übergabegeschwindigkeit $v_ü$ gebracht wird und mit dieser auf den dritten Synchronförderer 6 gelangt, an dem sich der gleiche Vorgang nochmals abspielt.

Ersichtlich ist es auch denkbar, daß ein von der Zufördereinrichtung 22 zugefördertes Stückgutteil 2 die erste Meßlinie 14 des ersten Synchronförderers 8 durchsetzt, nachdem der Melder 26 die Annäherung einer freien Förderschale 4' gemeldet hat. In einem solchen Falle würde das betreffende Stückgutteil die Übergabestelle 19 ersichtlich erst verspätet erreichen, wenn es mit Übergabegeschwindigkeit $v_ü$ weitertransportiert werden würde. Es muß daher über eine bestimmte Korrekturstrecke beschleunigt (und sodann wieder auf Übergabegeschwindigkeit $v_ü$ verzögert) werden.

Aus alledem ergibt sich, daß es einen größeren Startbereich ("Startfenster") gibt, aus dem ein auf dem ersten Synchronisierförderer 8 befindliches Stückgutteil 2 heraus noch ordnungsgemäß an der Übergabestelle 19 auf den Aufnahmeförderer 3 übergeben werden kann. Dieses "Startfenster" ist dadurch begrenzt, daß die zur erforderlichen Beschleunigung bzw. Verzögerung des betreffenden Stückgutteils über eine Korrekturstrecke erforderlichen Beschleunigungen bzw. Verzögerungen nicht so groß werden dürfen, daß es dabei zu einem Gleiten kommen kann. Dieses ist dann der Fall, wenn die vom Differenzbildner festgestellte Differenz der gezählten Impulse einen vorbestimmbaren Grenzwert überschreitet. In einem solchen Falle kann das betreffende Stückgutteil 2 einen vom Melder 26 gemeldeten freien Aufnahmeplatz 4' mithin nicht mehr erreichen, sondern es muß zugewartet werden, bis sich ein weiterer freier Aufnahmeplatz 4' der Übergabestelle 19 nähert und vom Melder 26 gemeldet wird.

Dieses ist bei dem in der Zeichnung beispielhaft dargestellten Momentanzustand bereits kurz darauf wieder der Fall, weil hinter der gerade den Melder 26 erreichenden freien Förderschale 4' nur eine belegte Förderschale 4 folgt und danach drei freie Förderschalen 4'. Da die Aufgabefördereinrichtung 1 so ausgelegt ist, daß jede zweite Förderschale 4 mit einem Stückgutteil 2 beschickbar sein soll (n = 2), kann von der Aufgabefördereinrichtung 1 mithin bereits wieder die übernächste freie Förderschale 4' hinter der gerade beim Melder 26 befindlichen Förderschale 4 und nach dieser wiederum die übernächste beschickt werden. Die dazwischen liegende freie Förderschale 4'' könnte nur dann beschickt werden, wenn die Aufgabefördereinrichtung mit der Vorgabe n = 1 ausgelegt wäre. Sie passiert mithin die Übergabestelle 19 leer und kann sodann von einer in Förderrichtung 5 nachfolgenden weiteren Aufgabefördereinrichtung 1 beschickt werden.

Es ist ohne weiteres erkennbar, daß der Durchsatz derartiger Anlagen mit einer erfindungsgemäß ausgestalteten und arbeitenden Aufgabefördereinrichtung (in aller Regel einer Vielzahl derartiger Aufgabefördereinrichtungen) ganz erheblich zu steigern ist. Dabei hat es sich gezeigt, daß die erforderlich werdenden Beschleunigungen bzw. Verzögerungen in aller Regel weit unterhalb derjenigen Grenzwerte liegen, bei deren Überschreitung ein Gleiten oder/und Kippen von Stückgutteilen zu befürchten ist. Es ist weiterhin erkennbar, daß die für diese Durchsatzsteigerung erforderlichen Maßnahmen einen vergleichsweise relativ kleinen Aufwand erfordern, und daß nicht zuletzt eine höchst genaue Synchronisierung mit genauer, definierter Beschickung der freien Aufnahmeplätze des Aufnahmeförderers zu erzielen ist.

B E Z U G S Z E I C H E N L I S T E
=====================================

| | | |
|---|---|---|
| 1 | Aufgabefördereinrichtung | 1 |
| 2 | Stückgutteile        2'- Vorderkante (von 2) | 2 |
| 3 | Aufnahmeförderer (Sorter) | 3 |
| 4 | Förderschalen (von 3) (= Aufnahmeplätze) | 4 |
| 4' | freier Aufnahmeplatz | 4' |
| 5 | Förderrichtung (von 3) | 5 |
| 6 | 3. Synchronförderer (von 1) | 6 |
| 7 | 2. Synchronförderer (von 1)  Synchronför-dereinrichtung | 7 |
| 8 | 1. Synchronförderer (von 1) | 8 |
| 9 | Antrieb von (6) | 9 |
| 10 | Antrieb von (7) | 10 |
| 11 | Antrieb von (8) | 11 |
| 12 | Lichtschranke (=3. Meßlinie) | 12 |
| 13 | Lichtschranke (=2. Meßlinie) | 13 |
| 14 | Lichtschranke (=1. Meßlinie) | 14 |
| 15 | 3. Impulsgeber (von 6) | 15 |
| 16 | 2. Impulsgeber (von 7) | 16 |
| 17 | 1. Impulsgeber (von 8) | 17 |
| 18 | Rotationsimpulsgeber (Taktgeber für ZS 1, ZS 2, ZS 3) | 18 |
| 19 | Übergabestelle | 19 |
| 20 | Trapezband | 20 |
| 22 | Zufördereinrichtung | 22 |

| | | |
|---|---|---|
| 23 | Lichtschranke | 23 |
| 24 | Fördereinrichtung (von 1) | 24 |
| 26 | Melder | 26 |
| 27 | Synchronisierfördereinrichtung (=6-8) | 27 |
| 28 | Startbereich | 28 |
| 29 | 2. Impulsgeber | 29 |
| ZE 1 | 3. Impulszähler | ZE 1 |
| ZE 2 | 2. Impulszähler b- Abstand (2/2 auf 22) | ZE 2 |
| ZE 3 | 1. Impulszähler L- Länge (von 4) | ZE 3 |
| ZS 1 | Impulszähler S- Abstand (4/4) | ZS 1 |
| ZS 2 | Impulszähler | ZS 2 |
| ZS 3 | Impulszähler (für 29) | ZS 3 |
| $V_{\ddot{u}}$ | Geschwindigkeit (Zufördereinrichtung) | |
| α | Einschleuswinkel (1/3) | α |

**Patentansprüche**

1. Aufgabefördereinrichtung zum jeweils einzelnen Aufgeben von Stückgutteilen auf einen freien Aufnahmeplatz eines Aufnahmeförderers, insbesondere eine freie Schale eines als Kippschalenförderer ausgebildeten Sorters, mit einer Zufördereinrichtung, einer der Zufördereinrichtung nachgeordneten, antriebsmäßig steuerbaren Synchronisierfördereinrichtung, von welcher die zugeführten Stückgutteile von der Aufgabestelle ohne Relativbewegung [= Gleiten, Kippen] zum Aufnahmeförderer zu fördern und mit einer in Förderrichtung der Aufgabefördereinrichtung gerichteten Übergabegeschwindigkeit zu übergeben sind, die im wesentlichen gleich dem Quotienten aus der Fördergeschwindigkeit des Aufnahmeförderers und dem Kosinus des zwischen der Aufgabefördereinrichtung und dem Aufnahmeförderer eingeschlossenen Winkel ist, und mit einem mit Abstand vor der Übergabestelle am Aufnahmeförderer angeordneten und von diesem betätigbaren Melder, welcher der Steuereinrichtung der Aufgabefördereinrichtung die Annäherung eines belegbaren, freien Aufnahmeplatzes an die Übergabestelle meldet, dadurch gekennzeichnet, daß die Zufördereinrichtung (22) die von ihr mit beliebiger Taktfolge zugeführten Stückgutteile (2) mit einer Zuführgeschwindigkeit > 0 an die Synchronisierfördereinrichtung (27) übergibt; daß die Synchronisierfördereinrichtung (27) aus wenigstens zwei einander unmittelbar nachgeordneten Synchronisierförderern (6, 7, 8) besteht, wobei deren Maximallänge jeweils gleich dem Quotienten aus dem N-fachen der Länge (L) eines Aufnahmeplatzes (4') des Aufnahmeförderers (3) und dem Kosinus des zwischen dem Aufnahmeförderer (3) und der Aufgabefördereinrichtung (1) eingeschlossenen Winkel (α) ist, wobei N = n ist; und daß der der Zufördereinrichtung (22) unmittelbar nachgeordnete erste Synchronförderer (8) bei Beschickung mit einem Stückgutteil (2) im wesentlichen mit Übergabegeschwindigkeit ($v_{\ddot{u}}$) angetrieben ist und an seinem Aufnahmeende einen mit einer sich über seine Förderbahn erstreckenden ersten Meßlinie (14) versehen Startbereich (28) aufweist, wobei die erste Meßlinie (14) beim Durchfördern eines Stückgutteils (2) ein Signal erzeugt, welches eine Meß- und Auswerteinrichtung betätigt, mittels welcher zum einen diejenige Förderzeit zu bestimmen ist, die von dem betreffenden Stückgutteil (2) benötigt wird, um den verbleibenden Weg bis zur Übergabestelle (19) mit der derzeitigen Momentangeschwindigkeit zurückzulegen, und zum anderen diejenige Zeit, die zum selben Zeitpunkt von dem sich der Übergabestelle (19) nähernden freien Aufnahmeplatz (4') benötigt wird, um den verbleibenden Weg bis zur Übergabestelle (19) zurückzulegen, wobei ein Differenzbildner für die ermittelten Zeiten vorgesehen ist, der das Differenzergebnis an die Steuereinrichtung der Aufgabefördereinrichtung (1) weiterleitet, wenn sich das Stückgutteil (2) noch im Startbereich (28) befindet, wobei die derzeitige Fördergeschwindigkeit des ersten Synchronisierförderers (8) unverändert bleibt, wenn die vom Differenzbildner ermittelte Differenz Null ist, während die Steuereinrichtung bei einer positiven oder negativen Differenz, die absolut nicht größer ist als ein vorgegebener Differenzwert, bei dessen Überschreiten das betreffende Stückgutteil (2) den sich der Übergabestelle (19) nähernden freien Aufnahmeplatz (4') nicht mehr erreichen kann, ohne unzulässig stark beschleunigt oder verzögert zu werden, ein Korrektursignal erhält, welches die Antriebsdrehzahl des Antriebes (11) des ersten Synchronisierförderers (8) so erhöht bzw. vermindert, daß das Stückgutteil (2) nach entsprechender Beschleunigung bzw. Verzögerung, einer Förderung mit erhöhter bzw. verminderter Fördergeschwindigkeit und Verzögerung bzw. Beschleunigung auf die Übergabegeschwindigkeit ($v_\ddot{u}$) längs einer Korrekturstrecke die Übergabestelle (19) mit Übergabegeschwindigkeit ($v_\ddot{u}$) gleichzeitig mit dem sich der Übergabestelle (19) nähernden freien Aufnahmeplatz (4') erreicht.

2. Aufgabefördereinrichtung nach Anspruch 1, dadurch gekennzeichnet, daß die Förderzeiten des betreffenden Stückgutteils (2) und des betreffenden freien Aufnahmeplatzes (4') des Aufnahmeförderers (3) unter Berücksichtigung der Momentangeschwindigkeiten des Stückgutteils (2) bzw. des freien Aufnahmeplatzes (4') jeweils über den momentanen Abstand des Stückgutteils (2) bzw. des freien Aufnahmeplatzes (4') von der Übergabestelle (19) ermittelt werden.

3. Aufgabefördereinrichtung nach Anspruch 2, dadurch gekennzeichnet, daß die momentanen Abstände des Stückgutteils (2) bzw. des freien Aufnahmeplatzes (4') von der Übergabestelle (19) jeweils aus der Differenz des vorbekannten Abstandes (a) des Melders (26) bzw. der ersten Meßlinie (14) zur Übergabestelle (19) und dem seit Auslösung des betreffenden Signals durch den Melder (26) von dem Stückgutteil (2) bzw. dem freien Aufnahmeplatz (4') bereits zurückgelegten Weges ermittelt werden.

4. Aufgabefördereinrichtung nach Anspruch 3, dadurch gekennzeichnet, daß der ersten Meßlinie (14) des ersten Synchronförderers (8) ein durch ein von der ersten Meßlinie (14) erzeugtes Signal in Betrieb gesetzter erster Impulsgeber (17) zugeordnet ist, dessen Impulse inkrementalen Wegstrecken der Förderbahn des ersten Synchronförderers (8) entsprechen, wobei dem ersten Impulsgeber (17) ein erster Impulszähler (ZE 3) zugeordnet ist; daß dem Melder (26) des Aufnahmeförderers (3) ein zweiter Impulsgeber (29) zugeordnet ist, dessen Impulse inkrementalen Wegstrecken der Förderbahn des Aufnahmeförderers (3) entsprechen, wobei dem zweiten Impulsgeber (29) ein Impulszähler (ZS 3) zugeordnet ist; und daß der Differenzbildner die Zählerstände der beiden Impulszähler (ZE 3, ZS 3) vergleicht.

5. Aufgabefördereinrichtung nach einem oder mehreren der vorhergehenden Ansprüche, dadurch gekennzeichnet, daß die Mindestanzahl der Synchronförderer (6, 7, 8) der Synchronfördereinrichtung (27) gleich dem Quotienten aus der maximal erforderlichen Korrekturstrecke und dem Quotienten aus dem N-fachen der Länge eines Aufnahmeplatzes (4') des Aufnahmeförderers (3) und dem Kosinus des zwischen dem Aufnahmeförderer (3) und der Aufgabefördereinrichtung (1) eingeschlossenen Winkel ($\alpha$) ist, wobei N = n ist.

6. Aufgabefördereinrichtung nach Anspruch 5, dadurch gekennzeichnet, daß die Anzahl der Synchronförderer (6 - 8) um 1 größer ist als die Mindestanzahl der Synchronförderer.

7. Aufgabeförderer nach einem oder mehreren der vorhergehenden Ansprüche, dadurch gekennzeichnet, daß die Synchronförderer (6, 7, 8) gleich lang ausgebildet sind.

8. Aufgabefördereinrichtung nach einem oder mehreren der vorhergehenden Ansprüche, dadurch gekennzeichnet, daß die Zufördereinrichtung (22) und die Synchronisierfördereinrichtung (27) ausgeschaltet werden, wenn der letzte Synchronförderer (6) bis unter eine Grenzgeschwindigkeit (ggf. auf Null) verzögert wird.

9. Aufgabefördereinrichtung nach einem oder mehreren der vorhergehenden Ansprüche, dadurch gekennzeichnet, daß n = 2 ist.

10. Aufgabefördereinrichtung nach einem oder mehreren der Ansprüche 1 bis 8, dadurch gekennzeichnet, daß n = 3 ist.

11. Aufgabefördereinrichtung nach einem oder mehreren der vorhergehenden Ansprüche, dadurch gekennzeichnet, daß die Zufördereinrichtung (22) mit einer Lichtschranke (23) versehen ist, mittels welcher der ankommende Stückgutstrom zu entzerren ist.

12. Aufgabefördereinrichtung nach einem oder mehreren der vorhergehenden Ansprüche, dadurch gekennzeichnet, daß jeder Synchronförderer (6 - 8) der Synchronisierfördereinrichtung (27) mit einem eigenen, stufenlos und unabhängig von den anderen Antrieben steuerbaren Antrieb (9 bzw. 10 bzw. 11) versehen ist.

13. Aufgabefördereinrichtung nach einem oder mehreren der vorhergehenden Ansprüche, insbesondere nach Anspruch 12, dadurch gekennzeichnet, daß jedem Synchronförderer (6 - 8) der Synchronisierfördereinrichtung (27) eine Meßlinie (12 bzw. 13 bzw. 14) zugeordnet ist, und daß jeder Meßlinie (12 bzw. 13 bzw. 14) ein Impulsgeber (15 bzw. 16 bzw. 17) zugeordnet ist, der mit einem Impulszähler (ZE 1 bzw. ZE 2 bzw. ZE 3) zusammenwirkt.

14. Aufgabefördereinrichtung nach einem oder mehreren der vorhergehenden Ansprüche, dadurch gekennzeichnet, daß die Impulsgeber als Rotationsimpulsgeber ausgebildet sind.

15. Aufgabefördereinrichtung nach einem oder mehreren der vorhergehenden Ansprüche, dadurch gekennzeichnet, daß die Impulsgeber als induktive Näherungsschalter mit Metallschlitzscheibe ausgebildet sind.

16. Aufgabefördereinrichtung nach einem oder mehreren der vorhergehenden Ansprüche, dadurch gekennzeichnet, daß der Synchronisierfördereinrichtung (27) ein Übergabeförderer (20) nachgeordnet ist.

17. Aufgabefördereinrichtung nach einem oder mehreren der vorhergehenden Ansprüche, dadurch gekennzeichnet, daß die Meßlinien (12 bis 14) rechtwinklig zur Förderrichtung (5) des Aufnahmeförderers (3) verlaufen.

18. Aufgabefördereinrichtung nach einem oder mehreren der vorhergehenden Ansprüche, dadurch gekennzeichnet, daß die Meßlinien (12 - 14) jeweils als Lichtschranke ausgebildet sind.

19. Aufgabefördereinrichtung nach einem oder mehreren der vorhergehenden Ansprüche, dadurch gekennzeichnet, daß zwei einander nachgeordnete Synchronförderer (8, 7 bzw. 7, 6) jeweils gleichzeitig gleichmäßig beschleunigt bzw. verzögert werden, wenn ein Stückgutteil (2) von einem Synchronförderer (z. B. 6) auf den nachfolgenden Synchronförderer(7) übergeben wird.

EP 0 577 021 A1

<table>
<tr><td colspan="4">

**Europäisches Patentamt**

**EUROPÄISCHER RECHERCHENBERICHT**

Nummer der Anmeldung

EP    93 11 0184

</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 027 394 (TISSMETAL LIONEL-DUPONT) <br><br> * das ganze Dokument * | 1,2,12, 18,19 | B65G43/10 <br> B65G47/31 |
| A | --- | 3,4,16 | |
| X | EP-A-0 343 613 (CANZIANI) <br><br> * das ganze Dokument * <br> --- | 1,13,18, 19 | |
| A | EP-A-0 305 755 (BERNHARD BEUMER MASCHINENFABRIK) <br> * das ganze Dokument * <br> --- | 1,13,14, 17 | |
| A | FR-A-2 528 402 (CANZIANI) <br> * Seite 1, Zeile 1 - Seite 2, Zeile 36; Abbildung 1 * <br> --- | 1,12 | |
| D,A | DE-C-2 909 292 (BERNHARD BEUMER MASCHINENFABRIK) <br> * Anspruch 1; Abbildungen 1-3 * <br><br> ----- | 1 | |
| | | | **RECHERCHIERTE SACHGEBIETE (Int. Cl.5)** <br><br> B65G |

Der vorliegende Recherchenbericht wurde für alle Patentansprüche erstellt

| Recherchenort | Abschlußdatum der Recherche | Prüfer |
|---|---|---|
| BERLIN | 07 OKTOBER 1993 | SIMON J. |